(19) Europäisches Patentamt
European Patent Office
Office européen des brevets

(11) **EP 4 001 109 A1**

(12) **DEMANDE DE BREVET EUROPEEN**

(43) Date de publication:
**25.05.2022 Bulletin 2022/21**

(21) Numéro de dépôt: **20208716.9**

(22) Date de dépôt: **19.11.2020**

(51) Classification Internationale des Brevets (IPC):
**B64C 39/00** (2006.01)   **B64G 1/40** (2006.01)
**B64D 27/02** (2006.01)

(52) Classification Coopérative des Brevets (CPC):
**B64G 1/409;** B64C 39/005

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(71) Demandeur: **Bedri, Rachid**
**54500 Grand Est Vandoeuvre-Les-Nancy (FR)**

(72) Inventeur: **Bedri, Rachid**
**54500 Grand Est Vandoeuvre-Les-Nancy (FR)**

(54) **DISPOSITIF DE PROPULSION SPATIALE SANS ÉJECTION DE MATIÈRE UTILISANT LES FORCES GÉNÉRÉES AU NIVEAU D'UN ENSEMBLE DE CORPS DE POUSSÉE PLACÉS DANS LA TRAJECTOIRE D'UN FLUIDE EN MOUVEMENT DANS UN CIRCUIT HERMÉTIQUEMENT FERMÉ**

(57)    La présente invention concerne un propulseur spatial caractérisé en ce qu'il ne rejette pas de matière pour se déplacer et peut fonctionner aussi longtemps qu'il est alimenté en courant électrique. Il est composé d'un circuit de conduits hermétiquement fermé, parcouru par un fluide à débit contrôlable selon un schéma de sens donné (3) et comprenant les éléments principaux suivants : ventilateurs (1), corps de poussée (6, 7, 8), convertisseurs de flux turbulent en flux laminaire (4) et déflecteurs de fluide (2).

Les corps de poussée fournissent, lorsqu'ils sont soumis à un flux de fluide laminaire, un ensemble de forces qui sont à l'origine des mouvements dudit propulseur. Les trois figures a, b et c sur la page 2 illustrent trois configurations d'un même propulseur. La configuration de la fig. a où le corps de poussé est une aile (6), celle de la fig. b où le corps de poussée est un objet tournant à symétrie axiale (7) et celle de la fig. c ou le corps de poussée est une association d'une aile et d'un objet tournant à symétrie axiale (8).

EP 4 001 109 A1

## Description

Ce Dispositif de propulsion spatial ne rejette pas de matière et n'a donc pas besoin de disposer de réservoir de matière à éjecter. Son fonctionnement est basé sur les principes physiques de fonctionnement d'une soufflerie à circulation de fluide en circuit fermé. A la différence de celle ci qui est immobile et a pour fonction d'étudier l'impact des forces générées par l'écoulement d'un fluide autour d'un objet d'étude, qui peut être un modèle réduit d'une aile d'avion par exemple, ledit propulseur exploite ces forces pour se mouvoir de façon rectiligne, changer de direction ou effectuer une rotation.

L'objet d'étude dans une soufflerie devient le corps de poussée dans ledit propulseur. Il peut être de différents types : une aile (6), un objet tournant à symétrie axiale (7) ou une association de ces deux éléments (8).

Le mouvement relatif de l'air par rapport à une aile d'avion engendre principalement deux forces aérodynamiques importantes. Ces forces sont composées d'une force de portance, ou de sustentation, perpendiculaire au sens de l'écoulement du courant d'air et qui maintient l'avion en l'air, et d'une force de trainée qui s'oppose à son mouvement.

L'utilisation des ailes n'est pas limitée à l'aérodynamique, certaines embarcations utilisent également des ailes, qu'on appelle des foils dans le milieu de la navigation maritime. Ces foils sont positionnées et profilées de façon à générer une portance hydrodynamique capable de soulever la coque de l'embarcation partiellement ou totalement hors de l'eau permettant ainsi de réduire sa trainée.

L'écoulement continu et relatif de l'air autour d'une aile d'avion produit une portance aérodynamique. De même l'écoulement de l'eau autour d'une foil de bateau produit une portance hydrodynamique. Dans l'espace, au delà de l'atmosphère terrestre, il n'y a ni air, ni eau pour produire une telle portance et encore moins de façon continue, sauf si le fluide est transporté depuis la terre et utilisé de manière recyclée dans un circuit hermétique à l'image d'une soufflerie à circulation d'air en circuit fermé.

Les lois de la physique, en l'occurrence de l'aérodynamique, sont les mêmes partout dans l'univers. Donc elles sont valables même pour un système se trouvant dans l'espace loin de la terre. Si on emmène une soufflerie, évidemment de taille raisonnable, dans l'espace, dans laquelle on place un objet de la forme d'une aile d'avion et on fait circuler un gaz, on verra apparaître des forces identiques à celles observées dans les souffleries sur terre, principalement la portance et la trainée. Sauf que dans l'espace on ne parlera pas de portance parce que cette force servira à la propulsion et pas à la sustentation, et on ne parlera pas de trainée mais de dérive parce que celle ci ne s'opposera pas à l'avance ? du vaisseau mais servira à le faire dériver.

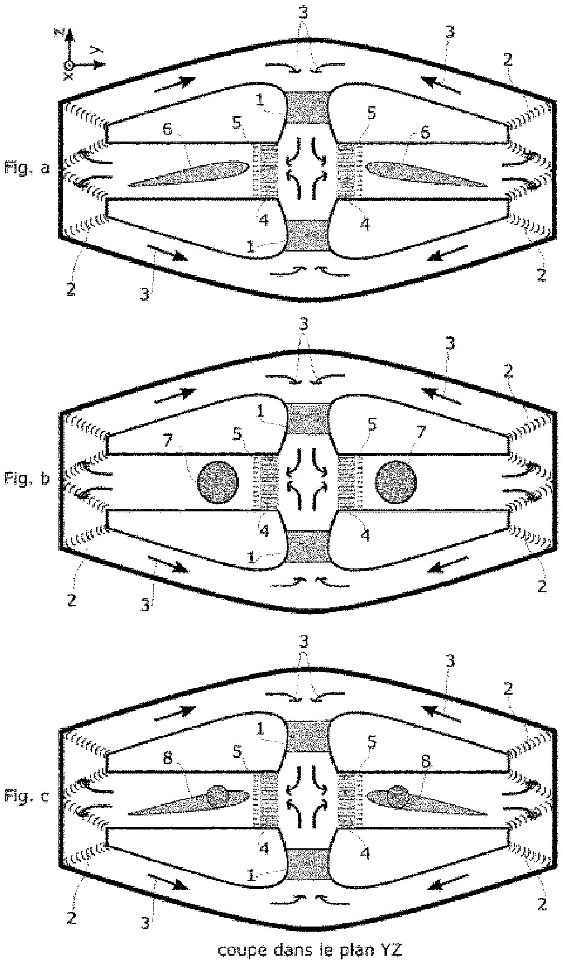

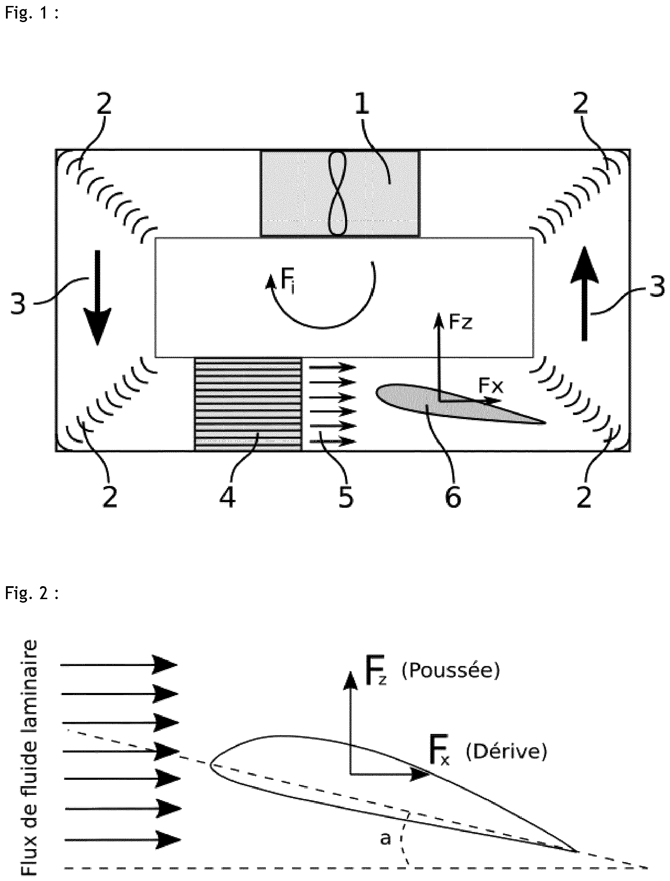

Une soufflerie à circulation de fluide en circuit fermé dont l'objet d'étude est un modèle réduit d'aile d'avion est le siège d'un ensemble de forces dont la portance (Fz), la trainée (Fx) et un couple de rotation induit (Fi), comme indiqué sur la fig. 1.

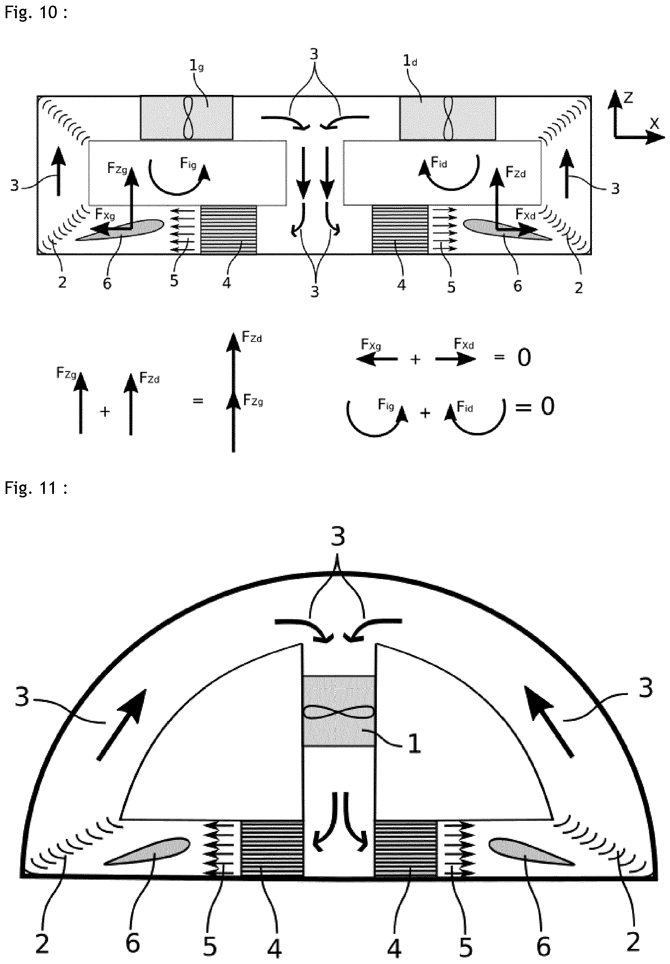

On peut combiner deux modules de soufflerie de ce type pour neutraliser les forces de trainée et de rotation deux à deux comme montré sur la fig. 10, et ne garder que les deux forces de poussée qui s'ajoutent dans ce cas de figure.

Donc, un système de type de celui de la fig. 10 bien compensé permettra de générer un mouvement rectiligne dû à la force de propulsion résultante qui est la somme des forces de poussée de chacun des deux corps de poussée.

**Description** des forces :

Les forces de poussée et de dérive sont deux forces générées par la présence d'un corps de poussée, qui peut être une aile, un objet tournant à symétrie axiale (par exemple un rotor Flettner utilisant l'effet Magnus) ou une association des deux éléments précédents, placé dans un flux de fluide. Toutes ces forces sont à l'origine des différents mouvements que le propulseur peut effectuer.

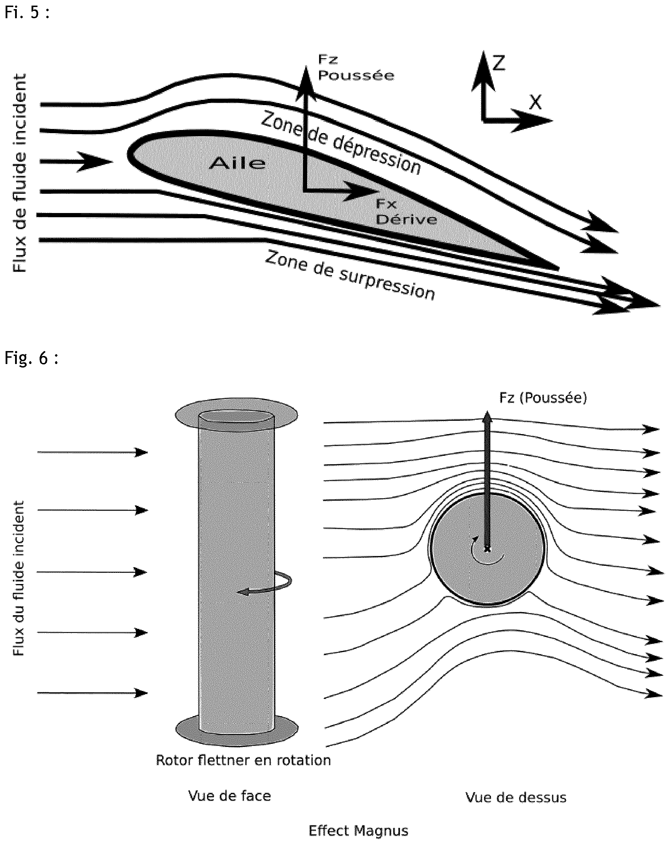

Expressions physiques de la poussée et de la dérive d'une aile (fig. 5) :

Comme indiqué sur la fig. 2, la poussée et la dérive correspondent respectivement à la portance et la trainée en aéronautique. On peut déduire que l'expression de la poussée est analoque à celle de la portance en aéronautique et s'écrit :

$$F_z = \frac{1}{2} . \rho . V^2 . S . C_z$$

Fz : poussée (en newton)
$\rho$ : masse volumique du fluide (en kg/m$^3$)
V : vitesse (en m/s)

S : surface de référence correspondant à la surface de la projection de l'aile sur le plan XY (en m$^2$)

Cz : coefficient de poussée (coefficient de portance en aéronautique).

D'après la formule de Fz, la poussée est d'autant plus importante que le fluide est plus dense. L'aile pousse plus ou moins suivant sa surface alaire, sa cambrure, son angle d'attaque ou l'utilisation éventuelle de dispositifs équivalents aux hypersustentateurs qu'on rencontre sur certaines ailes d'avion.

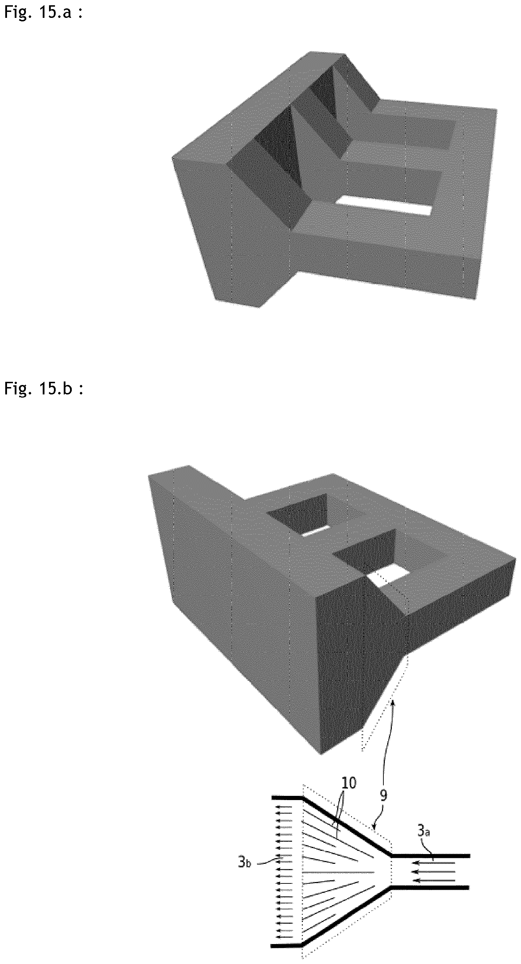

La fig. 15 affiche un propulseur utilisant des ailes avec une surface alaire importante.

L'expression de la dérive est identique à celle de la trainée en aéronautique :

$$F_x = \frac{1}{2} . \rho . V^2 . S . C_x$$

Fx : dérive (en newton)

$\rho$ : masse volumique du fluide (en kg/m$^3$)

V : vitesse (en m/s)

S : surface de référence correspondant à la surface frontale (en m$^2$)

Cx : coefficient de dérive (coefficient de trainée en aéronautique).

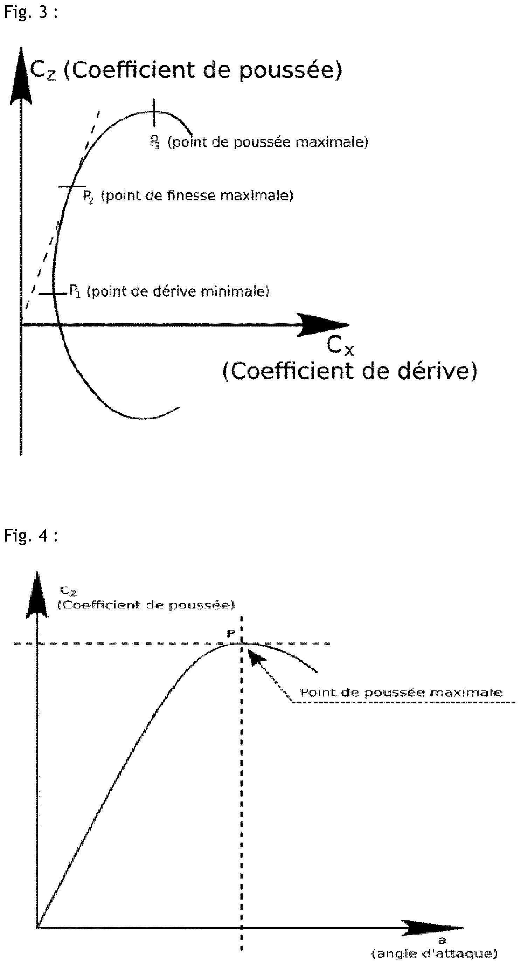

On appelle finesse le rapport Cz/Cx. Le point P2 de finesse maximale sur la courbe de la fig. 3 correspond au mode de fonctionnement optimal du propulseur pour lequel le maximum de puissance est utilisé par la poussée.

Contrairement à l'aéronautique, au delà du point de poussée maximale, il n'y a pas de risque de décrochage du vaisseau comme pour un avion en l'air mais un mode de fonctionnement où la dérive devient prépondérante par rapport à la poussée, comme indiqué sur la courbe de la fig. 4.

**Expressions physiques de la poussée et de la dérive pour un objet tournant à symétrie axiale du genre rotor Flettner (fig. 6) :**

Le rotor Flettner utilise l'effet Magnus pour générer une poussée. Cet effet apparaît au niveau d'un objet en rotation placé dans un flux relatif de fluide. Le rotor Flettner est un cylindre de type circulaire en rotation. Les expressions de la poussée et de la dérive pour un cylindre rotatif sont :

Poussée (d'après la formule de Kutta-Joukowski) :

$$F_z = \rho . V . G$$

$$\text{où} : \quad G = \pi . d . V_r \quad \text{et} \quad V_r = \pi . d . V_s$$

Fz : poussée (en newton)

$\rho$ : masse volumique du fluide (en kg/m$^3$)

V : vitesse de l'écoulement du fluide (en m/s)

G : force du vortex établi par la rotation du cylindre

Vr : circonférence de la section du cylindre multipliée par sa vitesse de rotation

$\pi$ : constante égale à 3.14

d : diamètre du rotor

Vs : vitesse de rotation du rotor

La poussée peut également s'écrire sous une forme plus générale comme celle pour une aile d'avion:

$$F_z = 1/2 . \rho . V^2 . S . C_z \qquad \text{où} : C_z = 2 . G / (V . S)$$

V : vitesse de l'écoulement du fluide (en m/s)

S : surface de référence correspondant à la surface apparente du cylindre vis à vis du flux (en m$^2$)

Cz : coefficient de poussée (coefficient de portance en aéronautique).

Dérive (trainée) :

$$F_x = 1/2 \ . \rho . \ V^2 . S \ . C_x$$

Fx : dérive (en newton)
$\rho$ : masse volumique du fluide (en kg/m$^3$)
V : vitesse de l'écoulement du fluide (en m/s)
S : surface de référence correspondant à la surface apparente du cylindre vis à vis du flux (en m$^2$)
Cx : coefficient de dérive (coefficient de trainée en aéronautique).

Les coefficients Cz et Cx dépendent de la présence ou pas de disques sur le rotor comme ceux montrés aux extrémités du cylindre de la fig. 6. D'ailleurs, on peut en mettre plusieurs à intervalles réguliers ou non tout au long du rotor, ce qui améliore considérablement la poussée de celui ci.

Ce corps de poussée à la particularité de changer diamétralement de sens de poussée quand on inverse le sens de rotation du rotor, ce qui est pratique pour ralentir, stoper et faire repartir le propulseur dans le sens opposé par exemple.

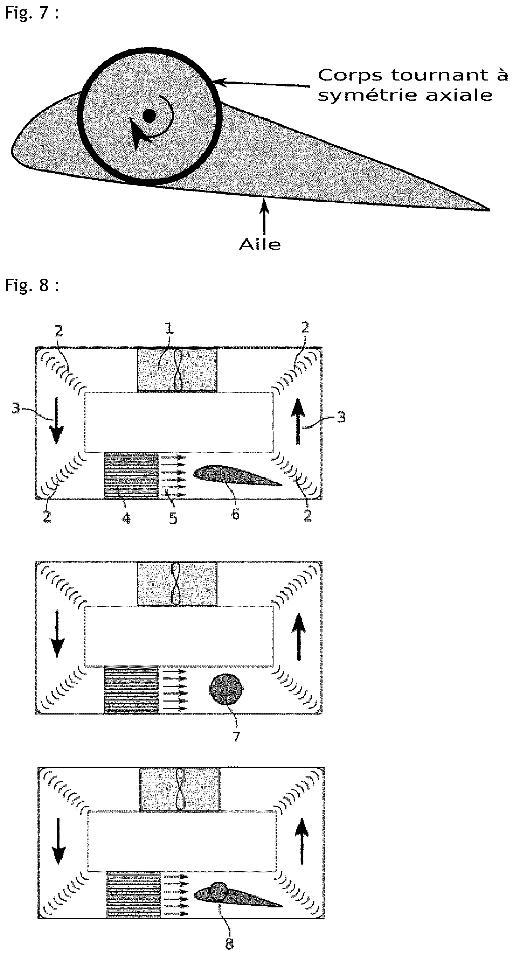

**Association** d'une aile et d'un objet tournant à symétrie axiale (fig. 7) :

En fonction de la disposition du cylindre rotatif par rapport à l'aile, celui-ci accentue les effets aérodynamiques sur celle ci en accélérant davantage l'écoulement du fluide sur l'extrados et derrière en augmentant ainsi la dépression, et en ralentissant l'écoulement sur l'intrados en augmentant la surpression ou les deux à la fois. La fig. 7 illustre un cylindre accélérant uniquement le flux relatif sur l'extrados de l'aile.

La fig. 8 affiche trois exemples de souffleries, chacune utilisant un type différent de corps de poussée : une aile (6), un objet tournant à symétrie axiale (7) et une association de ces deux éléments (8).

**Description d'une configuration de système de propulsion :**

Les appellations suivantes seront utilisées dans la description :

1) Propulseur rectangle est une soufflerie élémentaire qui a la forme d'un rectangle comme illustré sur la figure 1.

2) Propulseur bidimensionnel : propulseur dont les éléments qui le composent sont tous visibles dans une coupe faite dans un plan.

3) Propulseur tridimensionnel : propulseur dont les éléments qui le composent ne sont pas tous visibles dans une coupe faite dans un plan.

On se limitera dans cette description au fonctionnement d'un propulseur de type rectangulaire avec des conduits de section également rectangulaire et utilisant une aile comme corps de poussée. Cette version de propulseur qu'on qualifie, d'après la définition précédente, de propulseur bidimensionnel double rectangle (fig. 10).

Tout d'abord, examinons ce qui se passe dans un propulseur de type rectangle (Fig. 1).

Trois forces principales apparaissent quand ce propulseur est en fonctionnement; la poussée Fz, la dérive Fx et une force de rotation induite dont le sens est opposé à celui de la circulation du fluide dans les conduits, d'après le principe d'action-réaction de Newton. Le mouvement global est de type spiral et résulte de deux forces rectilignes Fz, Fx et une troisième tournante Fi, ce qui ne permet pas d'aller en ligne droite d'un point A à un point B.

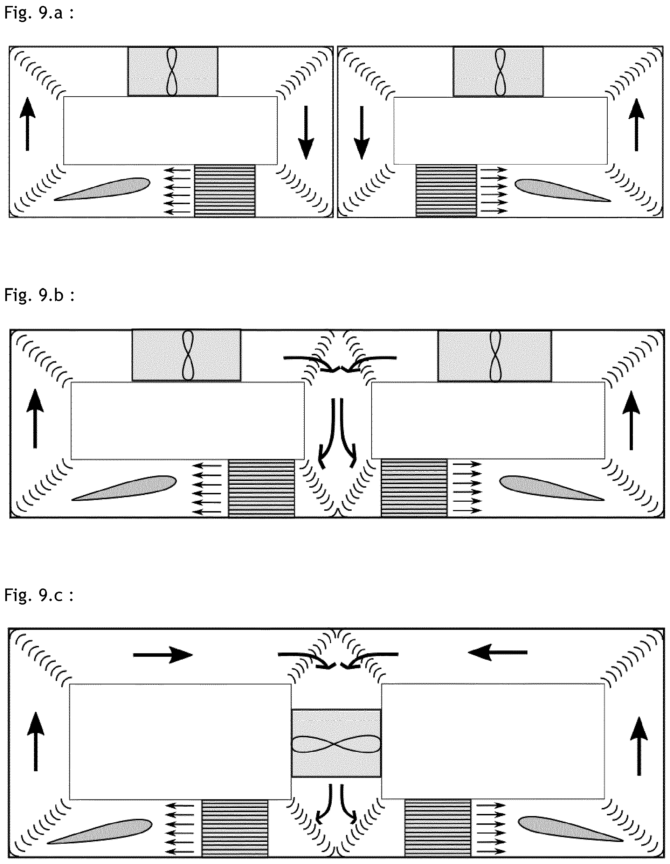

On peut remédier à ceci et contrôler le mouvement du dispositif en combinant au moins deux propulseurs bidimensionnels rectangles en un seul dispositif dont des exemples de construction sont illustrés sur les fig. 9.a, 9.b et 9.c.

La configuration du propulseur sur la fig. 9.c est une évolution de la configuration sur la fig. 9.a en passant par la configuration sur la fig. 9.b. Chacune de ces configurations nous permet de piloter dans une certaine mesure la force de rotation Fi et, celles de la dérive Fx et de la poussée en agissant sur la différence du débit du fluide dans les deux boucles du propulseur.

Si les deux boucles, gauche et droite, de chacune des configurations sont identiques d'un point de vue construction mécanique et bien équilibrées au niveau circulation du flux du fluide, alors seule la poussé persiste. Les deux autres forces de dérive et de rotation sont neutralisées deux à deux. La poussée résultante est égale à deux fois celle de chacune des ailes des deux boucles. Le schéma de la fig. 10, correspondant à la configuration sur la fig. 9.b, illustre bien les forces principales en action dans le propulseur.

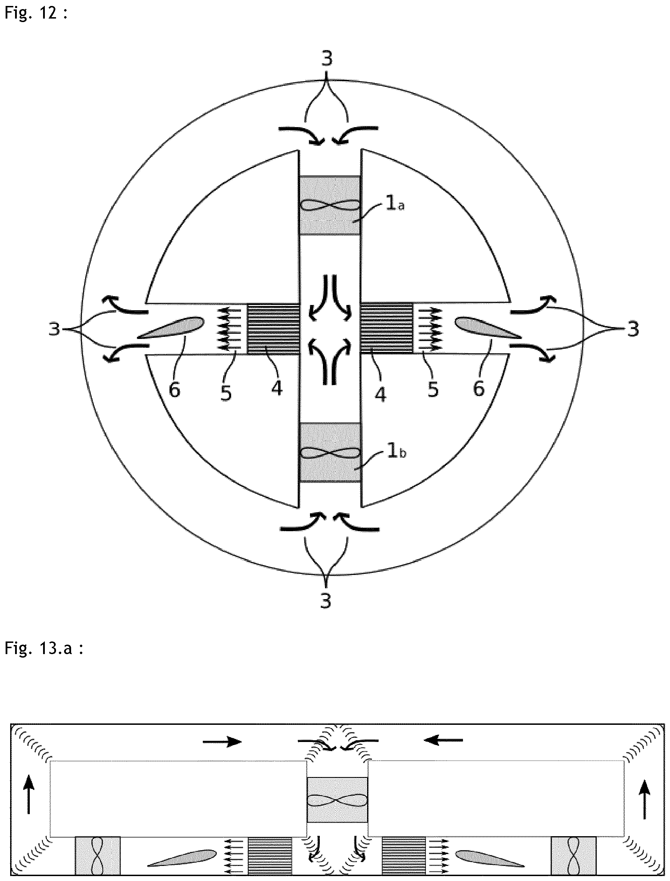

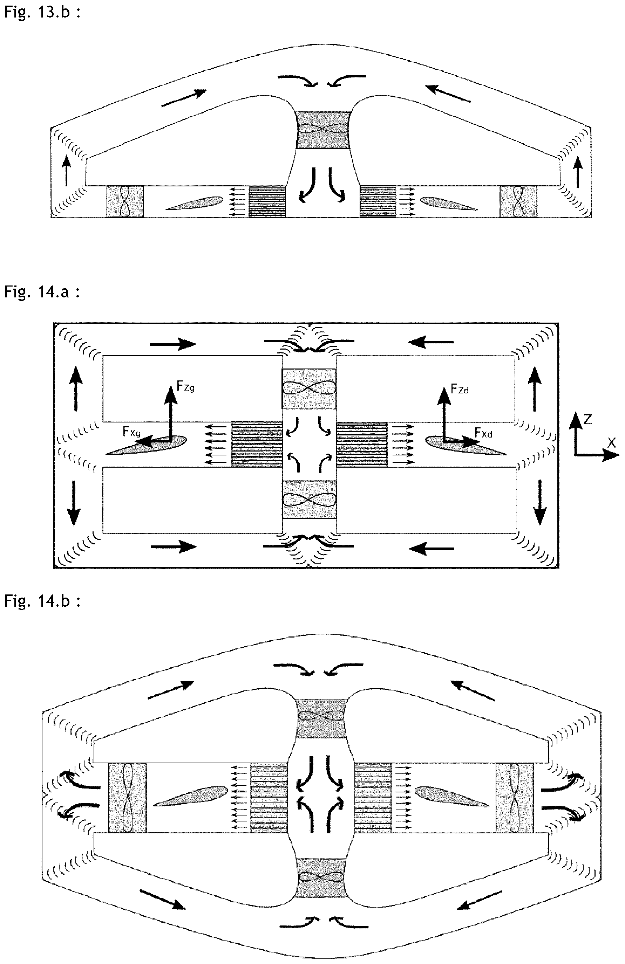

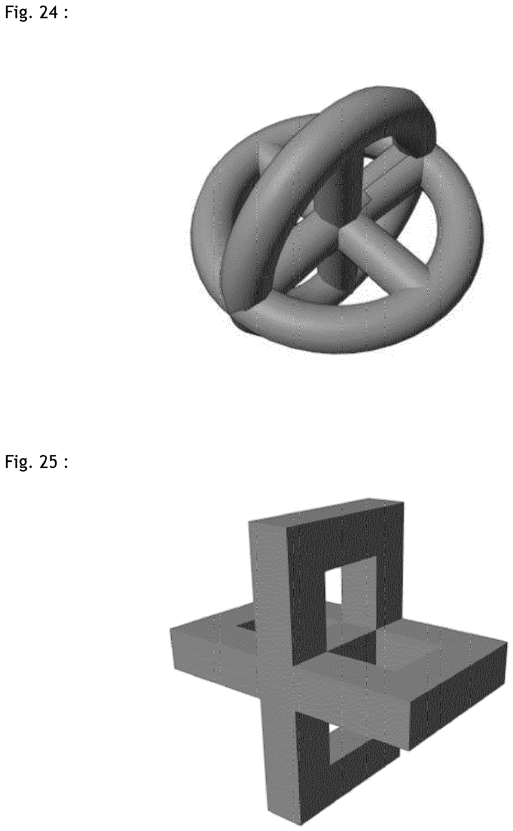

En considérant que la poussée est orientée dans le sens de l'axe des Z et la dérive dans celui des X, alors les deux boucles de chacune des configurations sont symétriques par rapport au plan YZ et les mouvements du propulseur limités au plan XZ. Pour avoir des mouvements dans tout l'espace, il faut soit combiner au moins deux propulseurs bidimensionnels de façon orthogonale comme indiqué sur la fig. 25 par exemple, soit avoir un corps de poussée orientable à l'intérieur du propulseur ou tout simplement placer et orienter de façon adéquate plusieurs propulseurs bidimensionnels comme par exemple celui de la fig. 13.a ou 13.b à des endroits précis du vaisseau spatial.

Comme précisé au début de la description, celle ci se limite au propulseur bidimensionnel double rectangle (fig. 9, 10 et 13.a) pour illustrer l'utilisation des principes physiques du fonctionnement d'une soufflerie plus ou moins complexe en circuit fermé pour réaliser un propulseur spatial.

Les configurations et formes de propulseurs que l'on peut réaliser sont nombreuses, en voici quelques variantes :

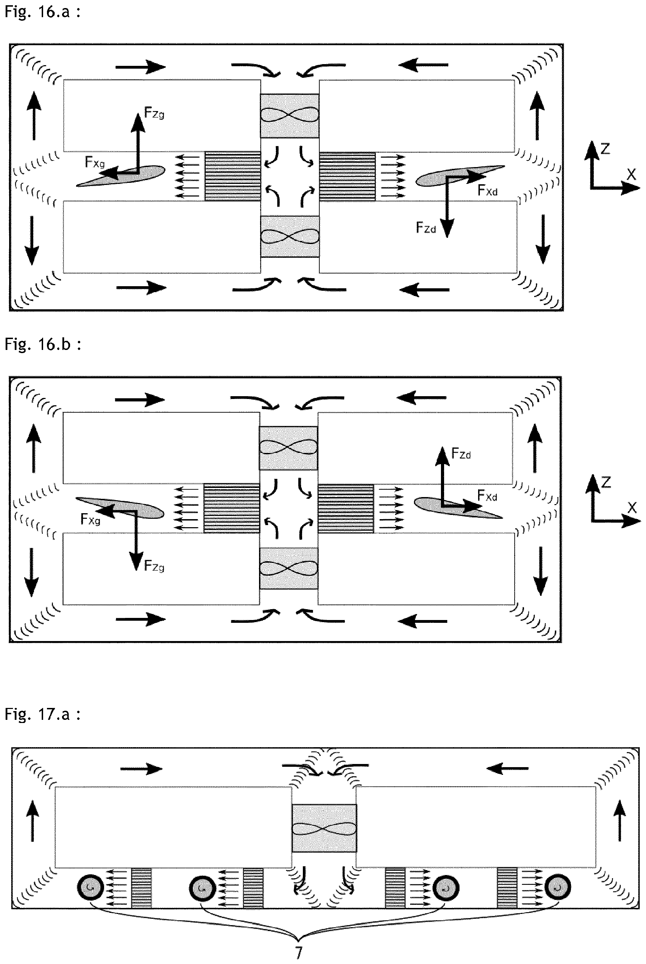

Les fig. 16.a et 16.b sont des configurations de changements de direction effectués par un propulseur de type bidimensionnel quadruple rectangle. On considère que les directions dans le sens de rotation des aiguilles d'une montre ou l'inverse sont données par rapport à un observateur regardant toujours le propulseur du même côté du plan XZ. Chaque configuration comporte deux ailes de profil biconvexe symétrique. Le sens de la poussée d'une aile dépend du signe de son angle d'attaque par rapport au flux laminaire du fluide incident. Les ailes dans la configuration fig. 16.a sont orientées de tel façon à appliquer un couple de forces Fzg et Fzd permettant de faire tourner le propulseur dans le sens de rotation des aiguilles d'une montre par rapport à l'observateur. Par contre celles de la fig. 16.b le font tourner dans le sens inverse.

Avec ce type de propulseur, le vaisseau peut effectuer différents actions et mouvements comme démarrer, se déplacer en ligne droite, changer de direction, ralentir, stopper et aller dans le sens opposé. Il suffit pour cela d'appliquer au couple d'ailes une succession de changements d'angles d'attaque pour obtenir la succession des actions et mouvements souhaités.

Les propulseurs demi-circulaire et circulaire (fig. 11 et 12) sont des configurations particulières respectivement des propulseurs double et quadruple rectangle dont les coudes ne sont pas à angle droit mais en arc de cercle.

Les fig. 15.a et 15.b affichent un propulseur double rectangle disposant d'ailes surdimensionnées pour augmenter la poussée globale. Celui ci dispose de trois conditionneurs (9) comportant des cloisons (10) lui permettant de répartir les flux sortants (3b) arrivant sur les ailes de manière uniforme sur toute la longueur des bords d'attaque. Les flux entrants (3a) dans les conditionneurs (9) quand à eux peuvent ne pas être uniformes puisqu'ils n'agissent pas directement sur les ailes.

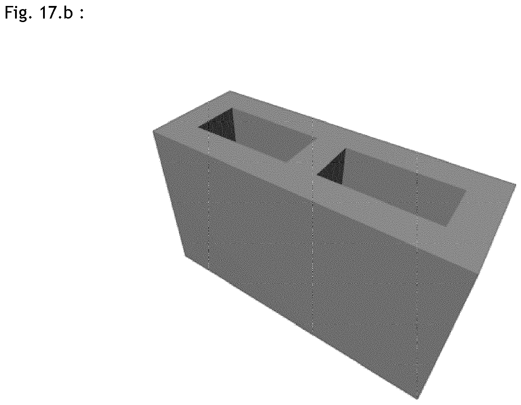

La fig. 17.a donne un cas de figure d'un propulseur utilisant deux cylindres rotatifs (7) de part et d'autre du plan de symétrie pour créer des poussées grâce à l'effet Magnus. La fig. 17.b donne une vue 3D du propulseur qui est haut pour contenir les rotors Flettner. Cette hauteur est adaptable, comme pour les ailes, en fonction du niveau de poussée qu'on veut obtenir.

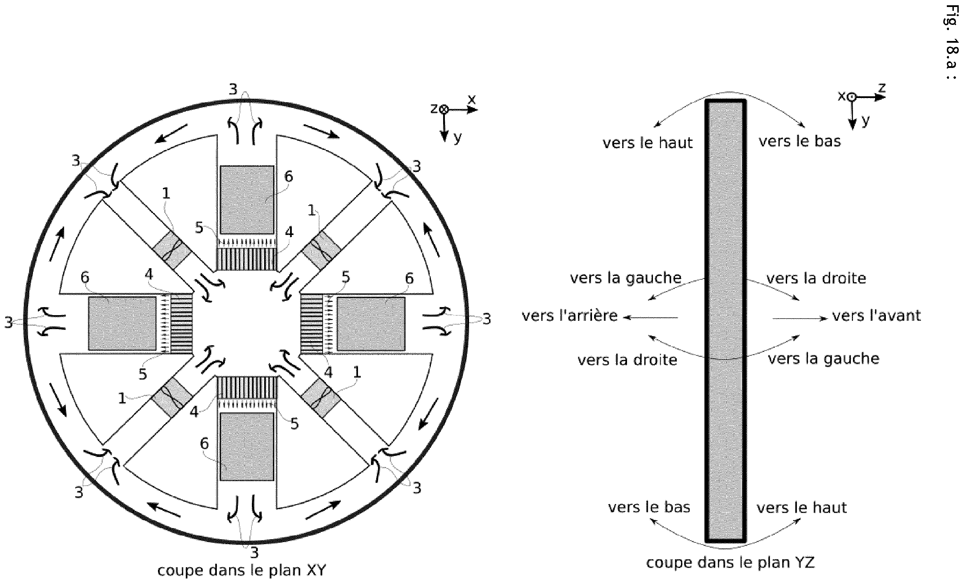

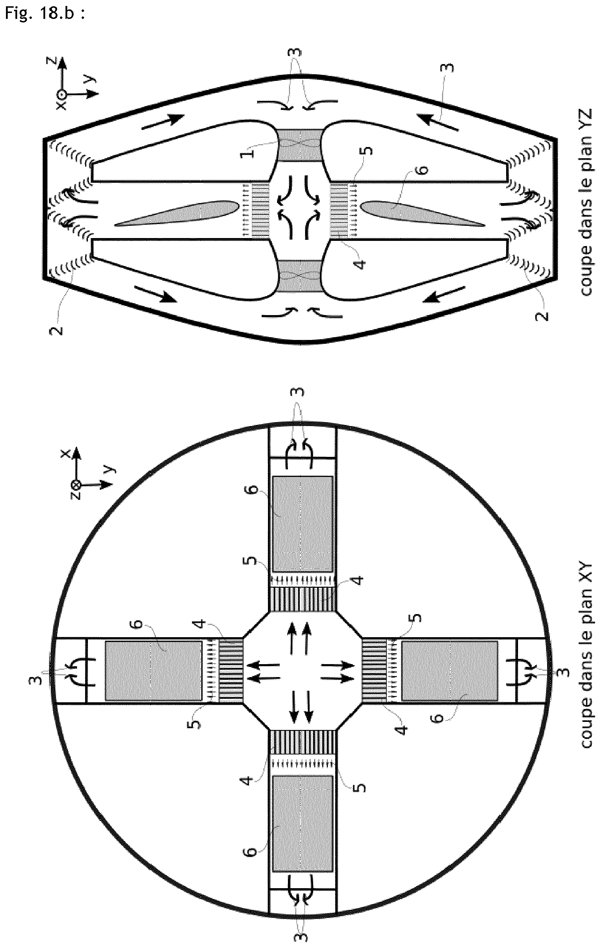

Le propulseur de la fig.18.a est de type bidimensionnel et comporte quatre corps de poussée de type aile d'avion (6) qui sont placés dans un même plan selon la disposition des points cardinaux. Cette disposition donne audit propulseur la capacité d'orienter ses mouvements dans toutes les directions de l'espace.

Les actions de changements de directions, démarrage, accélération, décélération et arrêt se font avec un simple changement d'orientation des ailes par rapport au plan du propulseur. Les actions et mouvements correspondent donc à des combinaisons bien précises de l'orientation des ailes les unes par rapport aux autres, et par rapport au plan du propulseur.

La forme circulaire dudit propulseur lui permet de s'insérer dans les engins spatiaux qui sont pour la plus part de forme cylindrique donc avec une section circulaire.

Les flèches sur la vue de la coupe dans le plan YZ de la fig. 18.a donnent les directions des mouvements que le propulseur peut prendre.

La fig. 18.b donne un exemple de version tridimensionnelle du propulseur, montrant deux coupes l'une dans le plan XY et l'autre dans le plan YZ. Le sens de la poussée est toujours pris dans le sens croissant de l'axe des Z.

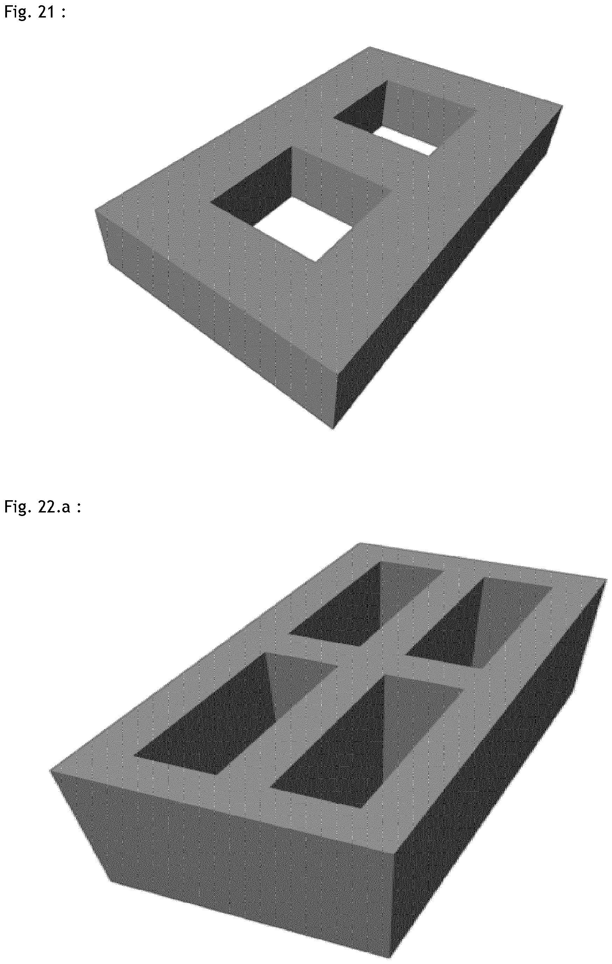

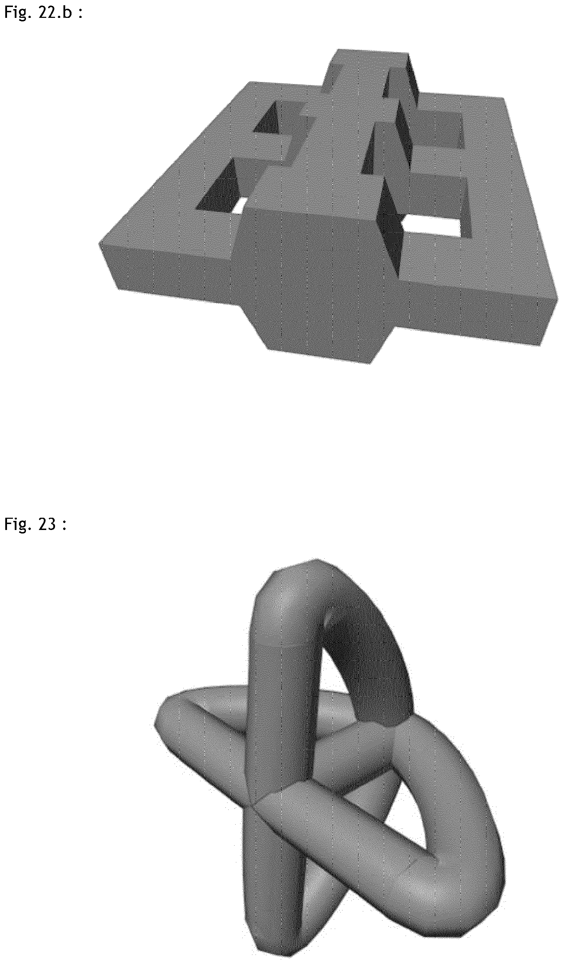

Les figures allant de 19 à 22 donnent les vues 3D d'exemples de propulseurs de type bidimensionnel qui sont respectivement; le demi-circulaire, circulaire, double rectangle, quadruple rectangle et quadruple rectangle avec ailes surdimensionnées (fig. 22.b).

Les figures allant de 23 à 26 donnent les vues 3D d'exemples de propulseurs de type tri-dimentionnel qui sont respectivement ; le demi-circulaire, circulaire, double rectangle et quadruple rectangle.

Les variantes du propulseur citées précédemment restent des variantes simples, mais on peut très bien ajouter des éléments mécaniques et électromécaniques à l'intérieur des propulseurs pour agir sur le niveau et le sens d'un ou plusieurs paramètres physiques ou donner plus de degré de liberté aux corps de poussée pour permettre un déplacement dans tout l'espace. En fait, les combinaisons sont nombreuses, la seule constante est que le fluide circule autour d'un ou plusieurs corps de poussée dans un circuit hermétiquement fermé pour produire des forces et par conséquent un mouvement.

**EP 4 001 109 A1**

Le propulseur faisant l'objet de ce dépôt d'invention est un assemblage adéquat de plusieurs souffleries élémentaires, comme celle montrée sur la fig. 1, montées de manière à composer une sorte de soufflerie plus complexe qui constitue le propulseur et fournir ainsi un ensemble de forces permettant à un vaisseau spatial de se mouvoir dans tout l'espace.

Ce type de propulseur n'a pas la prétention de faire décoller une fusée sur son pas de tir depuis la surface de la terre. D'ailleurs il en est incapable mais présente néanmoins une alternative sérieuse aux systèmes de propulsion interplanétaires de type électrique ou à effet Hall par exemple. Il peut être un bon candidat pour propulser les remorqueurs de l'espace pour aller d'un point A à un point B sans avoir besoin d'utiliser l'assistance gravitationnelle des planètes et autres corps célestes.

Si on prend le cas de figure du propulseur de la fig. 10, utilisant des ailes de type NACA 4412 avec la configuration suivante : épaisseur maxi entre 12 et 30% de la corde, - cambrure maxi entre 4 et 40% de la corde, - Cz (coefficient de portance) = 1.4092 (angle d'attaque de 12°), - S (corde x envergure) = 2x(0.2x0.2) = 0.08 m2 (surface globale des deux ailes), - rho (densité du gaz) = 1.2 kg/m3 (pour une humidité relative = 40% et une température = 20°C), - V (vitesse d'écoulement du gaz) = 20 m/s.

D'après la formule Fz = , la poussée des deux ailes carrées de 20 cm de côté chacune est égale dans ce cas à 27 Newton. Le coefficient Cz est donné pour des ailes dépourvues de dispositifs additionnels comme les actionneurs plasma permettant d'améliorer grandement l'écoulement du fluide autour des ailes et augmenter ainsi le niveau de la poussée.

A titre de comparaison, un test récent effectué par la NASA avec le propulseur à effet Hall X3, a donné une poussée de 5.4 newtons à une puissance de 102 kilowatts contre 3.3 newtons à une puissance de 98 kilowatts lors d'un test précédent.

La puissance de 102 kilowatts est énorme à fournir dans l'espace pour faire propulser un engin tirant son énergie des panneaux solaires. Les panneaux solaires du télescope Hubble par exemple ne fournissent que 5 kilowatts, il faudrait donc des km2 de panneaux solaires pour fournir la centaine de kW de puissance nécessaire.

Comme illustré précédemment le propulseur faisant l'objet de cette demande de brevet peut délivrer des poussées largement supérieures aux propulseurs ioniques actuellement en cours de développement et ceci pour quelques kilowatts et sans avoir besoin de réservoir de gaz pour produire du plasma à éjecter.

Ce propulseur peut tirer son alimentation en courant électrique directement des panneaux solaires du vaisseau. Ceux-ci sont opérationnels jusqu'aux alentours de la planète Jupiter, ce qui lui donne un bon rayon d'action à partir du soleil avec une source d'énergie renouvelable. Par contre, pour les missions au-delà de cette limite, une pile nucléaire comme source d'énergie électrique peut assurer le relais des panneaux solaires.

**Dessins :**

Les dessins utilisés sont des dessins de principes, ce qui fait que les bonnes dimensions et les proportions ne sont pas forcément respectées et les éléments qui composent les propulseurs ne sont pas tous affichés dessus.

Fig. 1 : Propulseur rectangle (soufflerie élémentaire) comportant les éléments et indications suivants : un ventilateur (1), des déflecteurs (2), sens du flux du fluide (3), convertisseurs de flux turbulent en flux laminaire (4), flux laminaire (5), corps de poussée (une aile d'avion ici) (6).

Fig. 2 : Forces présentes sur une aile d'avion inclinée d'un angle « a » par rapport au fluide laminaire incident.

Fig. 3 : Evolution du coefficient de la poussée d'une aile d'avion en fonction du coefficient de la dérive.

Fig. 4 : Evolution du coefficient de la poussée d'une aile d'avion en fonction de l'angle d'attaque.

Fig. 5 : Corps de poussée sous forme d'une aile d'avion.

Fig. 6 : Corps de poussée sous forme d'un objet tournant à symétrie axiale (rotor Flettner par exemple).

Fig. 7 : Corps de poussée sous forme d'une association d'une aile d'avion et d'un corps tournant à symétrie axiale.

Fig. 8 : Exemples de propulseurs rectangles (souffleries élémentaires) utilisant différents types de corps de poussée : aile d'avion (6), objet tournant à symétrie axiale (7), association d'une aile d'avion et d'un corps tournant à symétrie axiale (8).

Fig. 9 : Trois exemples de propulseurs composés de deux propulseurs rectangles :

○ séparées (fig. 9a),
○ combinés utilisant deux turbines séparées (fig. 9b),
○ combinés utilisant une seule turbine commune (fig. 9c).

Fig. 10 : Forces importantes présentes dans un propulseur double rectangle en fonctionnement utilisant des ailes comme corps de poussée.

Fig. 11 : Coupe montrant les éléments principaux composant un propulseur bidimensionnel demi-circulaire.

Fig. 12 : Coupe montrant les éléments principaux composant un propulseur bidimensionnel circulaire.

Fig. 13 : Coupe montrant les éléments principaux composant un propulseur bidimensionnel double rectangle (fig. 13.a) et le même propulseur avec un désigne différent type aile d'avion (fig. 3.b).

Fig. 14 : Coupe montrant les éléments principaux composant un propulseur bidimensionnel quadruple rectangle (fig. 14.a) et le même propulseur avec un désigne différent type soucoupe volante (fig. 14.b).

Fig. 15 : les figures 15.a affichent les vues 3D d'un propulseur double rectangle avec des ailes surdimensionnées. La figure 15.b montre une coupe d'un conditionneur de flux. Le propulseur en contient trois, placés entre les parties des sections réduites et larges des conduits. Sur le schéma figure les flux entrants (3a) et sortants (3b), conditionneur du flux (9) et cloisons (10).

Fig. 16 : L'orientation des angles d'attaque des ailes (corps de poussée) permettent au propulseur d'effectuer des changements de direction (translation + rotation). La fig. 16.a illustre un changement de direction dans le sens de rotation des aiguilles d'une montre et dans le sens inverse sur la fig. 16.b.

Fig. 17 : Coupe montrant les éléments principaux composant un propulseur bidimensionnel double rectangle utilisant des cylindres rotatif comme corps de poussé (Fig. 17.a) et sa vue 3D (fig. 17.b).

Fig. 18.a et 18.b : Vues dans les plans XY et YZ de deux propulseurs bi et tridimensionnel. Chacun dispose de quatre corps de poussée lui permettant de se mouvoir dans n'importe quelle direction de l'espace.

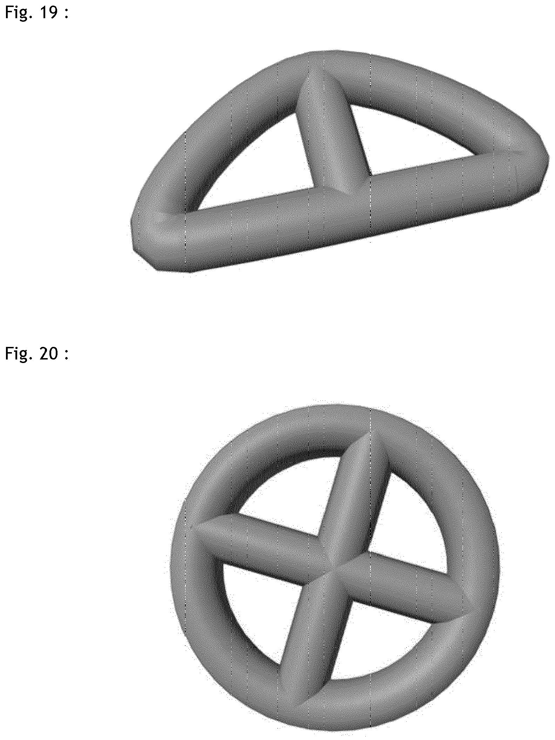

Fig. 19 : Vue 3D d'un propulseur bidimensionnel demi-circulaire.

Fig. 20 : Vue 3D d'un propulseur bidimensionnel circulaire.

Fig. 21 : Vue 3D d'un propulseur bidimensionnel double rectangle.

Fig. 22 : Vue 3D d'un propulseur bidimensionnel quadruple rectangle. Même type de propulseur avec des ailes surdimensionnées (fig. 22.b).

Fig. 23 : Vue 3D d'un propulseur tridimensionnel demi-circulaire.

Fig. 24 : Vue 3D d'un propulseur tridimensionnel circulaire.

Fig. 25 : Vue 3D d'un propulseur tridimensionnel double rectangle.

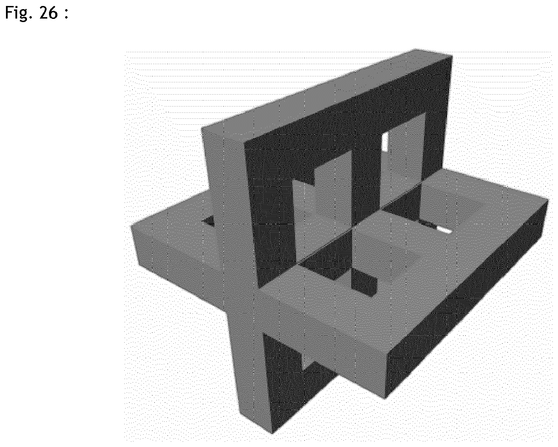

Fig. 26 : Vue 3D d'un propulseur tridimensionnel quadruple rectangle.

**Revendications**

1. Dispositif de propulsion spatial **caractérisé en ce qu'**il ne rejette pas de matière pour se déplacer et peut fonctionner aussi longtemps qu'il est alimenté en courant électrique. Son fonctionnement obéit aux mêmes principes physiques de fonctionnement qu'une soufflerie à circulation de fluide en circuit fermé. Ledit propulseur est composé d'un circuit de conduits hermétiquement fermé qui est parcouru par un fluide à débit contrôlable. Ledit circuit comporte un ensemble d'éléments, qui concourent à générer un ensemble de forces quand le fluide est en circulation, dont des ventilateurs (1), corps de poussée (6, 7, 8), convertisseurs de flux turbulent en flux laminaire (4) et déflecteurs de fluide (2).

2. Dispositif selon la revendication 1, **caractérisé en ce que** le circuit hermétiquement fermé dudit propulseur est constitué d'un assemblage adéquat d'une ou plusieurs souffleries élémentaires (fig. 1) avec mise en commun éventuelle de certaines parties et éléments comme les corps de poussée (6, 7, 8), ventilateurs (1), déflecteurs (2) et convertisseurs de flux (4).

3. Dispositif selon la revendication 2, **caractérisé en ce que** les forces générées par celui ci, quand le fluide est en circulation, sont à l'origine des actions de type arrêt, démarrage, accélération ou décélération, et des mouvements uniformes ou composés de type rectiligne, rotation ou changement de direction.

4. Dispositif selon la revendication 2, **caractérisé en ce que** sa forme extérieure, vu l'absence de frottement dans l'espace avec un gaz extérieur, n'est pas conditionnée par des contraintes aérodynamiques particulières et peut être de formes quelconques (fig. 8 à 26), et même prendre la forme adéquate pour être contenu dans le vaisseau spatial.

5. Dispositif selon la revendication 1, **caractérisé en ce qu'**il peut utiliser une aile (6), un objet tournant à symétrie axiale (rotor Flettner par exemple) (7), une association de ces deux éléments (8) comme corps de poussée ou tout autre objet permettant de générer une poussée à cause de sa présence statique ou dynamique dans les conduits quand le fluide est en circulation.

6. Dispositif selon la revendication 5, **caractérisé en ce qu'**on peut agir sur le profil, les dimensions, l'orientation, l'inclinaison et/ou la position des corps de poussée pour contrôler le niveau et le sens des forces générées.

7. Dispositif selon la revendication 5, **caractérisé en ce que** des actionneurs plasma positionnés de manière adéquate sur les corps de poussée dudit propulseur permettent de contrôler de manière active l'écoulement du fluide permettant d'améliorer grandement la poussée et de réduire la trainé au niveau du corps de poussée.

8. Dispositif selon la revendication 1, **caractérisé en ce que** le mouvement du fluide dans le propulseur est généré par la rotation de l'hélice d'un ventilateur ou tout autre dispositif intérieur ou extérieur au circuit, capable de produire le déplacement à débit contrôlable du fluide dans les conduits.

Fig. a

Fig. b

Fig. c

coupe dans le plan YZ

Fig. 1 :

Fig. 2 :

Fig. 3 :

Fig. 4 :

Fi. 5 :

Fig. 6 :

Effect Magnus

Fig. 7 :

Corps tournant à
symétrie axiale

Aile

Fig. 8 :

Fig. 9.a :

Fig. 9.b :

Fig. 9.c :

Fig. 10 :

$$\overset{F_{zg}}{\uparrow} + \overset{F_{zd}}{\uparrow} = \overset{F_{zd}}{\underset{F_{zg}}{\uparrow}}$$

$$\overset{F_{xg}}{\longleftarrow} + \overset{F_{xd}}{\longrightarrow} = 0$$

$$\overset{F_{ig}}{\curvearrowright} + \overset{F_{id}}{\curvearrowleft} = 0$$

Fig. 11 :

Fig. 12 :

Fig. 13.a :

Fig. 13.b :

Fig. 14.a :

Fig. 14.b :

Fig. 15.a :

Fig. 15.b :

Fig. 16.a :

Fig. 16.b :

Fig. 17.a :

Fig. 17.b :

Fig. 18.a :

coupe dans le plan YZ

coupe dans le plan XY

Fig. 18.b :

coupe dans le plan YZ

coupe dans le plan XY

Fig. 19 :

Fig. 20 :

Fig. 21 :

Fig. 22.a :

Fig. 22.b :

Fig. 23 :

Fig. 24 :

Fig. 25 :

Fig. 26 :

**Europäisches Patentamt**
**European Patent Office**
**Office européen des brevets**

# RAPPORT DE RECHERCHE EUROPEENNE

Numéro de la demande

EP 20 20 8716

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2012/091533 A2 (AKHMEJANOV ALIBI [KZ]) 5 juillet 2012 (2012-07-05) * page 7 - page 8; figures 1-8 * ----- | 1-8 | INV. B64C39/00 B64G1/40 B64D27/02 |
| X | US 2009/236475 A1 (LEIBOW ROBERT A [US]) 24 septembre 2009 (2009-09-24) * alinéa [0007] - alinéa [0011]; revendications 1-8; figures 1-2 * ----- | 1-8 | |
| X | DE 10 2007 004746 A1 (NEUWALD HARTMUT [DE]) 4 décembre 2008 (2008-12-04) * alinéa [0006] - alinéa [0044]; revendication 1; figures 1, 2, 4-6, 11 * ----- | 1-8 | |

| DOMAINES TECHNIQUES RECHERCHES (IPC) |
|---|
| B64C B64G F03B B64D |

Le présent rapport a été établi pour toutes les revendications

| Lieu de la recherche | Date d'achèvement de la recherche | Examinateur |
|---|---|---|
| Munich | 3 mai 2021 | Kirchmayr, Sara |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 20 20 8716

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-05-2021

| Document brevet cité au rapport de recherche | Date de publication | Membre(s) de la famille de brevet(s) | Date de publication |
|---|---|---|---|
| WO 2012091533 A2 | 05-07-2012 | EA 201101017 A1<br>EP 2658776 A2<br>US 2013181095 A1<br>WO 2012091533 A2 | 29-06-2012<br>06-11-2013<br>18-07-2013<br>05-07-2012 |
| US 2009236475 A1 | 24-09-2009 | AUCUN | |
| DE 102007004746 A1 | 04-12-2008 | AUCUN | |

Pour tout renseignement concernant cette annexe : voir Journal Officiel de l'Office européen des brevets, No.12/82